# EUROPÄISCHE PATENTSCHRIFT

(11) **EP 1 212 550 B1**
(45) Veröffentlichungstag und Bekanntmachung des Hinweises auf die Patenterteilung: **23.04.2003**
(21) Anmeldenummer: 00953117.9
(22) Anmeldetag: 28.07.2000
(51) Int. Cl.: F16H 37/02, F16H 61/02

(54) **VERFAHREN ZUR STEUERUNG DER SCHALTUNGEN EINES KRAFTFAHRZEUGGETRIEBES**
METHOD FOR CONTROLLING GEAR CHANGES OF A MOTOR VEHICLE GEAR BOX
PROCEDE DE COMMANDE DES CHANGEMENTS DE VITESSES D'UNE BOITE DE VITESSES

(30) Priorität: 28.08.1999 DE 19941009
(43) Veröffentlichungstag der Anmeldung: 12.06.2002
(73) Patentinhaber: Volkswagen Aktiengesellschaft, 38436 Wolfsburg (DE)
(72) Erfinder: BOTHE, Edgar, 31224 Peine (DE); VAN DER HARDT ABERSON, Frederik, 38100 Braunschweig (DE); HINRICHSEN, Uwe, 38124 Braunschweig (DE)
(86) Internationale Anmeldenummer: EP0007335
(87) Internationale Veröffentlichungsnummer: WO01016506

(56) Entgegenhaltungen:
- WO-A-85/02663
- US-A- 4 672 863
- US-A- 4 674 359

## Beschreibung

Die Erfindung betrifft ein Verfahren zur Steuerung der Schaltung eines Kraftfahrzeuggetriebes, wobei das Kraftfahrzeuggetriebe aus einem stufenlosen ersten Getriebebereich und einem zweiten Stufen-Getriebebereich gebildet und als automatisches Schaltgetriebe ausgeführt ist, wobei der zweite Stufen-Getriebebereich mindestens zwei Gangstufen aufweist und durch die erste Gangstufe in Kombination mit dem stufenlosen ersten Getriebebereich ein erster Übersetzungsbereich und durch die zweite Gangstufe in Kombination mit dem stufenlosen ersten Getriebebereichein zweiter Übersetzungsbereich ausgebildet ist und der erste und der zweite Übersetzungsbereich einen gemeinsamen Überlappungsbereich aufweisen und die stufenlose und/oder stufenweise Schaltung mit Hilfe eines Steuergerätes realisiert wird.

Im Stand der Technik, von dem die Erfindung ausgeht (EP 0 164 344 B1), ist ein Kraftfahrzeuggetriebe bekannt, das einen stufenlos schaltbaren ersten Getriebebereich (CVT-Getriebe) und einen zweiten Stufen-Getriebebereich, nämlich ein 2-Gang Stufen-Schaltgetriebe aufweist. Das Kraftfahrzeuggetriebe ist als automatisches Schaltgetriebe ausgeführt. Aufgrund des stufenlosen ersten Getriebebereiches, der vzw. als CVT-Getriebe ausgeführt ist, kann ein für den Fahrer des Kraftfahrzeugs relativ komfortables Fahrverhalten des Kraftfahrzeuges realisiert werden, da für den Fall, daß nur das CVT-Getriebe, also der stufenlos schaltbare erste Getriebebereich allein eingesetzt wird, aufgrund der stufenlosen Verstellung "ruckartige Schaltungen" Schaltungen vermieden werden können.

Der stufenlose erste Getriebebereich weist einen Riemenantrieb auf, der aus einem Primärscheibenpaar mit veränderlich wirksamem Radius, einem Sekundärscheibenpaar mit veränderlichen wirksamem Radius und einem die beiden Scheibenpaare umschlingenden Riemen besteht.

Der zweite Stufen-Getriebebereich weist zwei Gangstufen auf, die jeweils durch entsprechende Zahnradpaare gebildet werden. Die Antriebswelle des CVT-Getriebes, des ersten Getriebebereiches, kann über eine entsprechende Kupplung mit der Antriebswelle eines Antriebsmotors wirksam verbunden werden, wobei die Abtriebswelle des CVT-Getriebes,des ersten Getriebebereiches, mit der Eingangswelle des zweiten Stufen-Getriebebereiches wirksam verbindbar ist. Die Eingangswelle des zweiten Stufen-Getriebebereiches ist aufgeteilt in eine Voll- und eine Hohlwelle, die über entsprechend vorgesehene Kupplungen jeweils mit der Ausgangswelle des ersten Getriebebereiches wirksam verbindbar ist. Folglich wird in Abhängigkeit davon, welche der beiden Kupplungen geschlossen ist die Ausgangswelle des ersten Getriebebereiches mit der ersten oder der zweiten Gangstufe des zweiten Stufen-Getriebebereichs wirksam verbunden. Die Gesamtübersetzung dieses Kraftfahrzeuggetriebes errechnet sich aus der Variatorübersetzung des ersten Getriebebereiches multipliziert mit, d. h. der Übersetzung des zweiten Stufen-Getriebebereiches. Durch die erste Gangstufe des Stufen-Getriebebereiches in Kombination mit dem stufenlosen ersten Getriebebereich wird ein erster Übersetzungsbereich ausgebildet, wobei durch die zweite Gangstufe in Kombination mit dem stufenlosen ersten Getriebebereich ein zweiter Übersetzungsbereich ausgebildet ist. Diese Übersetzungsbereiche sind so gewählt bzw. ausgebildet, daß der erste und der zweite Übersetzungsbereich einen gemeinsamen Überlappungsbereich aufweisen, insbesondere dadurch bedingt, da das Übersetzungsverhältnis der ersten zur zweiten Gangstufe relativ klein gewählt wird.

Zwar sind die beiden Gangstufen des zweiten Stufen-Getriebebereiches des bekannten Kraftfahrzeuggetriebes, von dem die Erfindung ausgeht (EP 0 164 344B1), so gewählt, daß ein sogenannter "High-Range-Bereich" und ein "Low-Range-Bereich" realisiert ist, so daß für die unterschiedlichen Fahrsituationen bzw. Fahrzustände des Kraftfahrzeuges der jeweilige "Bereich" mit Hilfe des Steuergerätes eingeschaltet werden kann. Fährt der Fahrer beispielsweise an einen Berg an, muß also ein hoher Fahrwiderstand überwunden werden, so kann der zweite Stufen-Getriebebereich in die erste Gangstufe, in das hier realisierte größere Übersetzungsverhältnis geschaltet werden. Während der Fahrt des Fahrzeuges kann dann von der ersten Gangstufe in die zweite Gangstufe zurückgeschaltet werden. Dies geschieht in Abhängigkeit der Fahrzeuggeschwindigkeit, der gemessenen Drehmomente bzw. Drehzahlen und anderer Kenndaten, die dem Steuergeräte zugeleitet werden.

Problematisch ist - bisher - im Stand der Technik das Schalten bzw. die Ausführung des Schaltvorganges zwischen den beiden Gangstufen des zweiten Stufen-Getriebebereiches, da der Fahrer des Kraftfahrzeuges diese Schaltungen als unangenehm, nämlich "ruckartig" und plötzlich auftretend empfindet. Zwar ist der Gangsprung zwischen den beiden Gangstufen relativ klein gewählt, dennoch kann es in der Praxis, also während der Fahrt eines Kraftfahrzeuges zu vom Fahrer des Kraftfahrzeuges empfundenen "ruckartigen Schaltungen" kommen. Folglich ist das vom Fahrer empfundene Fahrverhalten eines derartigen Kraftfahrzeuges nicht optimal.

Der Erfindung liegt daher die Aufgabe zugrunde, das eingangs genannte Verfahren, derart auszugestalten und weiterzubilden, daß der Fahrkomfort für den Fahrerdes Kraftfahrzeuges erhöht ist, insbesondere vom Fahrer aber "ruckartig" empfundene Schaltungen vermieden sind.

Die zuvor aufgezeigte Aufgabe ist nun dadurch gelöst, daß die stufenweisen Schaltungen des zweiten Stufen-Getriebebereiches innerhalb des Überlappungsbereiches während einer Änderung der Fahrpedalstellung des Gaspedals ausgelöst werden. Dadurch, das die stufenweisen Schaltungen nunmehr nur noch erfolgen, wenn auch die Fahrpedalstellung des Gaspedals geändert wird, d. h. dann, wenn der Fahrer das Gaspedal entsprechend bedient, werden diese Schaltungen "quasi" in den "Fahrpedalwinkeländerungen versteckt", da mit einer Änderung der Fahrpedalstelllung des Gaspedals -wie auch ei konventionellen Automatikgetrieben - eine Drehzahlerhöhung oder Drehzahlreduzierung des Antriebsmotor verbunden ist. Da nun genau in diesen Phasen nämlich bei der Drehzahlerhöhung oder Drehzahlreduzierung des Antriebsmotors die Schaltungen zwischen den beiden Gangstufen des zweiten Stufen-Getriebereiches erfolgen, vom Fahrer des Kraftfahrzeuges zu den empfundenen plötzlich "ruckartigen Schaltungen". Folglich ist der für den Fahrer individuelle Fahrkomfort erheblich verbessert.

Es gibt nun eine Vielzahl von Möglichkeiten, das erfindungsgemäße Verfahren in vorteilhafter Weise auszugestalten und weiterzubilden. Hierfür darf zunächst auf die dem Patentanspruch 1 nachgeordneten Patentanspruch verwiesen werden. Im folgenden soll nun ein bevorzugtes Ausführungsbeispiel der Erfindung anhand einer Beschreibung und der dazugehörigen Zeichnung näher erläutert werden. In der Zeichnung 1 zeigt
- Fig.1: in einer schematischen vereinfachten Darstellung ein Kraftfahrzeuggetriebe mit einem stufenlosen ersten Getriebebereich und einem zweiten Stufen-Getriebebereich,
- Fig. 2: in einer schematischen Darstellung die schaltungstechnische Anordnung zur Steuerung des Kraftfahrzeuggetriebes.

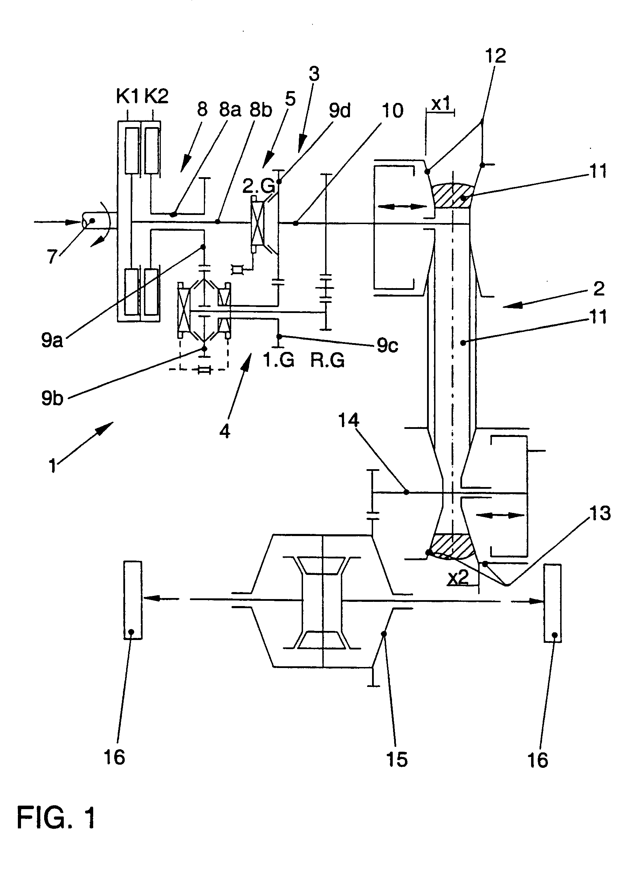

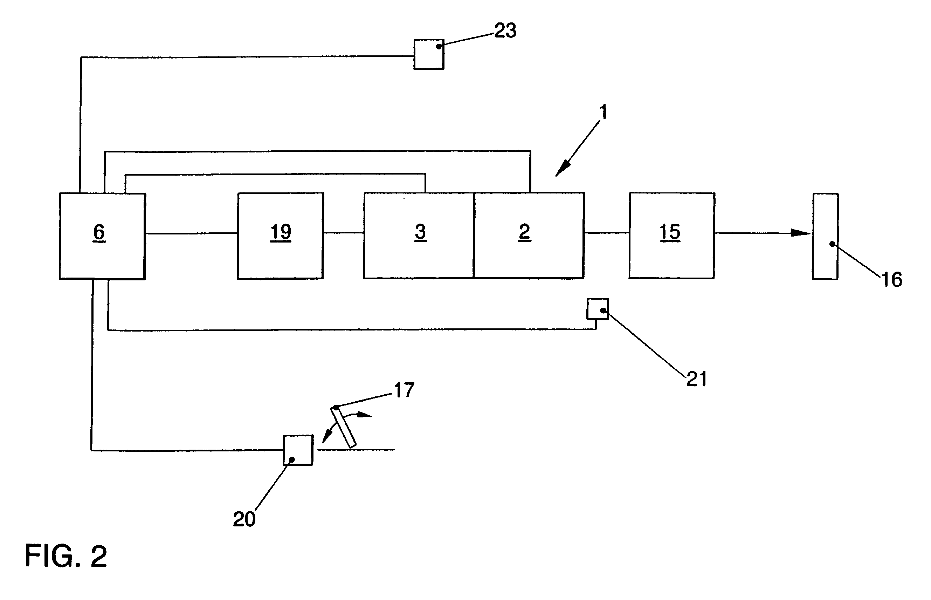

Fig. 1 zeigt ein Kraftfahrzeuggetriebe 1 für ein hier nicht dargestelltes Kraftfahrzeug. Das hier dargestellte Kraftfahrzeuggetriebe 1 ist als automatisiertes Schaltgetriebe ausgeführt und weist einen stufenlosen ersten Getriebebereich 2 und einen zweiten Stufen-Getriebebereich 3 auf. Der zweite Stufen-Getriebebereich 3 weist mindestens zwei Gangstufen, nämlich eine erste Gangstufe 4 und eine zweite Gangstufe 5 auf. Die erste Gangstufe 4 bildet in Kombination mit dem stufenlosen ersten Getriebebereich 2 einen ersten Übersetzungsbereich, wobei die zweite Gangstufe 5 in Kombination mit dem stufenlosen ersten Getriebebereich 2 einen zweiten Übersetzungsbereich bilden. Die so gebildeten Übersetzungsbereiche weisen einen gemeinsamen Überlappungsbereich auf. Die stufenlose und/oder stufenweise Schaltung wird mit Hilfe eines in Fig. 2 dargestellten Steuergerätes 6 realisiert, was im folgenden noch näher erläutert werden soll.

Fig. 1 zeigt eine Motorantriebswelle 7 und eine Getriebeeingangswelle 8, die einerseits eine Hohlwelle 8a und eine Vollwelle 8b aufweist. Über zwei separate vorgesehene Kupplungen K1 und K2 kann die Hohlwelle 8a bzw. die Vollwelle 8b mit der Motorantriebswelle 7 wirksam verbunden werden. Ist beispielsweise die Kupplung K1 geschlossen, so ist die Motorantriebswelle 7 mit der Vollwelle 8b wirksam verbunden, wobei bei geschlossener Kupplung K2 die Motorantriebswelle 7 mit der Hohlwelle 8a verbunden ist.

Bei geschlossener Kupplung K2 ist die erste Gangstufe 4 des zweiten Getriebebereiches 3 über die entsprechend miteinander in Eingriff stehenden Zahnräder 9a, b, c, d, also die hierdurch gebildete Wirkungskette mit der Welle 10 geschlossen.

Ist die Kupplung K2 geöffnet und die Kupplung K1 geschlossen, so ist die Motorantriebswelle 7 über die Vollwelle 8b mit der Welle 10 wirksam verbunden, weil die zweite Gangstufe 5 eingelegt ist. Beispielsweise kann die zweite Gangstufe 5 über ein Planetenradgetriebe oder auch über eine weitere hier nicht dargestellte entsprechende Zahnrad-Wirkungskette realisiert werden. Das Verhältnis der beiden Gangstufen zueinander beträgt vzw. zwischen 1,2 bis 1,5.

Weiterhin weist der zweite Stufen-Getriebebereich 3 noch die Möglichkeit auf, einen entsprechenden Rückwärtsgang RG einzulegen, was hier aber nicht mehr im einzelnen erläutert werden soll.

Gut zu erkennen ist der stufenlose erste Getriebebereich 2, der als "Eingangswelle" die Welle 10 aufweist. Dieser erste Getriebebereich 2 ist vzw. als CVT-Getriebe ausgeführt und entsprechend der jeweiligen Fahrsituation einstellbar. Das erste Getriebe durch den ersten Getriebebereich 2 realisierte Übersetzungsverhältnis ist hierbei stufenlos variabel einstellbar. Hierzu ist ein entsprechender Riemenantrieb vorgesehen, der einen Riemen 11, ein Primärscheibenpaar 12 und ein Sekundärscheibenpaar 13 aufweist. Der erste Getriebebereich 2 ist nun durch axiale Hubbewegungen X1 und X2 entsprechend stufenlos verstellbar, da die Primärscheibenpaare 12 bzw. die Sekundärscheibenpaare 13 keilscheibenförmig ausgeführt sind und durch die axiale Hubbewegung hier jeweils verschiedene Radien einstellbar sind, auf denen der Riemen 11 läuft. Hierdurch kann eine stufenlos frei wählbare Übersetzung innerhalb des ersten Getriebebereiches 2 realisiert werden. Folglich werden über die Welle 10 die entsprechenden Drehmomente über die Primärscheiben 12 auf den Riemen 11, dann auf die Sekundärscheiben 13 und schließlich auf die "Ausgangswelle", nämlich die Welle 14 übertragen. Über ein nachgestaltetes Differentialgetriebe 15 erfolgt dann der Antrieb der hier schematisch angedeuteten Räder 16 des nicht dargestellten Kraftfahrzeuges.

Bisher war bei der Kombination von im Stand der Technik bekannten Stufenganggetrieben mit CVT-Getrieben problematisch, daß bei einem Wechsel der ersten zur zweiten Gangstufe (oder umgekehrt) kein komfortables Fahrverhalten des Kraftfahrzeuges gegeben war, da der Fahrer hier einen entsprechenden "ruckartigen Stoß" wahrgenommen hat.

Gemäß dem erfindungsgemäßen Verfahren wird der Fahrkomfort nun dadurch erhöht, daß die stufenweisen Schaltungen des zweiten Stufen-Getriebebereiches 3 innerhalb des Überlappungsbereiches während einer Änderung der Fahrpedalstellung des Gaspedals 17 ausgelöst werden. Da die bisher im Stand der Technik realisierten Verfahren die stufenweisen Schaltungen von der ersten in die zweite Gangstufe (oder auch umgekehrt) nicht in Abhängigkeit einer Änderung der Fahrpedalstellung des Gaspedals 17 realisiert haben, was nunmehr gemäß den erfindungsgemäßen Verfahren der Fall ist, werden - einfach ausgedrückt - die damit verbundenen "ruckartigen Stöße" in den Fahrpedalstellungsänderungen des Gaspedals 17 "versteckt". Eine derartige schaltungstechnische Steuerung wird vom Fahrer nicht als unangengenehm empfunden, da er in dem Moment wo er auch das Gaspedal 17 entsprechend bedient, d. h. die Fahrpedalstellung des Gaspedals 17 ändert, auch eine Änderung des Fahrverhaltens des Kraftfahrzeugs erwartet. Der individuelle Eindruck des Fahres, das für ihm subjektiv empfundene Fahrverhalten des Kraftfahrzeuges ist nunmehr wesentlich komfortabler.

Fig. 2 zeigt nun in schematischer Darstellung eine hier vereinfacht dargestellte Steuerschaltung zur Steuerung des Kraftfahrzeuggetriebes 1. Deutlich zu erkennen ist das Steuergerät 6, das über entsprechende Steuerleitungen 18 mit dem Kraftfahrzeuggetriebe 1 bzw. jeweils dem ersten Getriebebereich 2 und dem zweiten Getriebebereich 3 verbunden ist. Weiterhin ist der Motor 19 und das Differentialgetriebe 15 zu erkennen. Das Gaspedal 17 ist im unteren Bereich der Fig. 2 dargestellt, wobei zur Ermittlung der Fahrpedalstellung bzw. der Änderung der Fahrpedalstellung ein erster Sensor 20 vorgesehen ist. Weiterhin kann die Drehzahl der Abtriebswelle des Kraftfahrzeuggetriebes 1 über einen zweiten Sensor 21 ermittelt werden. Selbstverständlich werden - wie bisher üblich - dem Steuergerät 6 auch andere Daten bzw. Betriebparameter die den Fahrzustand des Kraftfahrzeuges entsprechend beschreiben, über weitere Sensoren zugeführt, wobei hier nur exemplarisch ein dritter Sensor 22 dargestellt ist.

Die erste Gangstufe 4, die hier durch die Zahnräder 9a, b, c und d gebildet wird umfaßt den Bereich des Anfahrens des Fahrzeuges bis hin zur Höchstgeschwindigkeit, insbesondere ist - bei eingelegter erster Gangstufe 4 - ein erster Übersetzungbereich mit einem Übersetzungsverhältnis von 3 bis 0,75 gebildet. Bei eingelegter zweiter Gangstufe 5 wird der Bereich des Anfahrens des Fahrzeugs bei kleinem Fahrwiderstand bis hin zum "Overdrive" umfaßt, so daß insbesondere ein zweiter Übersetzungsbereich für das Kraftfahrzeuggetriebe 1 mit einem Übersetzungsverhältnis von 2 bis 0,5 gegeben ist. Folglich weist das Kraftfahrzeuggetriebe 1 für den gemeinsamen Überlappungsbereich ein Übersetzungsverhältnis von 2 bis 0,75 auf.

Wie Fig. 2 deutlich macht, wird nun die Fahrpedalstellung des Gaspedals 17 ermittelt, nämlich über den ersten Sensor 20. Der Sensor 20 ist im Bereich des Gaspedals 17 im Fahrzeugraum vorgesehen, und ist vzw. als Induktiv-Geber, Potentiometer und/oder Winkelmesser ausgeführt. Es ist auch denkbar, daß die Drehmomente bzw. Drehzahlen an der Getriebeeingangswelle und/oder an der Motorantriebswelle 7 sowie eine entsprechende Motordrehzahl, beispielsweise über einen dritten Sensor 22, um den entsprechenden Fahrzeug-Betriebszustand in dem jeweiligen Augenblick genau charakterisieren zu können, gemessen werden, wobei derartige Kenndaten dann dem Steuergerät 6 zugeführt werden.

Aufgrund der dem Steuergerät 6 zugeleiteten gemessenen Daten wird auch der Fahrwiderstand des Fahrzeuges ermittelt. Bei einem geringen bis mittleren Fahrwiderstand wird mit Hilfe des Steuergerätes 6 die zweite Gangstufe 5 innerhalb des zweiten Stufen-Getriebebereiches 3 eingelegt, wobei bei einem hohen Fahrwiderstand die erste Gangstufe 4 eingelegt wird. Der Fahrwiderstand kann bspw. über das Drehmoment der Antriebsräder (Multiplikation des Motor-Drehmomentes mit der Getriebeübersetzung und über die Fahrzeugbeschleunigung (Raddrehzahlmessung) mit Hilfe eines Fahrzeug spezifischen Kennfelderermittelt werden

Allerdings wird beim Anfahren des Fahrzeugs bei hohen Fahrwiderstand erst kurz nach oder während des Durchtretens des Gaspedals 17 die erste Gangstufe 4 eingelegt, wobei die Kupplung hier im Schlupf gehalten wird und die Motordrehzahl auf der Anfahr-Solldrehzahl gehalten wird. Insbesondere kann die Motordrehzahl auf der Anfahr-Solldrehzahl gehalten werden, wenn die erste Gangstufe 4 eingelegt wird und hierdurch bedingt ein entsprechend größeres Übersetzungsverhältnis realisiert wird. Weiterhin bleibt die erste Gangstufe 4 beim Anfahren des Fahrzeugs dann so lange eingelegt, bis die Fahrpedalstellung des Gaspedals 17 reduziert wird, woraufhin dann die zweite Gangstufe 5 einlegbar ist bzw. eingelegt wird.

Es bleibt festzuhalten, daß die Schaltungen gemäß dem erfindungsgemäßen Verfahren - im Gegensatz zum Stand der Technik - nicht immer in einem bestimmten Betriebspunkt bei gegebenenfalls konstanter Fahrpedalstellung des Gaspedals 17 realisiert werden, sondern auch insbesondere aufgrund der relativ großen Überlappungen, also des relativ großen Überlappungsbereiches der Übersetzungsbereiche erst dann, wenn der Fahrer selbst durch sein Verhalten ein instationäres Fahrverhalten bewirkt.

Ausnahmsweise kann das erfindungsgemäße Verfahren so ausgeführt sein, daß ein Hochschalten bei konstanter Fahrpedalstelllung des Gaspedals 17 notwendig wird, wenn beispielsweise der Fahrer das Gaspedal 17 permanent durchgetreten hält und der Variator des ersten Getriebebereiches 2 die "Overdrive-Stellung" erreicht. Auch "Kick-Down-Schaltungen" können so durchgeführt werden.

### BEZUGSZEICHENLISTE

- 1: Kraftfahrzeuggetriebe
- 2: erster Getriebebereich
- 3: zweiter Getriebebereich
- 4: erste Gangstufe
- 5: zweite Gangstufe
- 6: Steuergerät
- 7: Motorantriebswelle
- 8: Getriebe
8a Hohlwelle
8b Vollwelle
- 9a, b, c, d: Zahnräder
- 10: Welle
- 11: Riemen
- 12: Primärscheibenpaar
- 13: Sekundärscheibenpaar
- 14: Welle
- 15: Differentialgetriebe
- 16: Räder
- 17: Gaspedal
- 18: Steuerleitungen
- 19: Motor
- 20: erster Sensor
- 21: zweiter Sensor
- 22: dritter Sensor
- K1, K2: Kupplungen
- RG: Rückwärtsgang
- X1,X2: Axiale Hubbewegungen

## Patentansprüche

1. Verfahren zur Steuerung der Schaltungen eines Kraftfahrzeuggetriebes (1), wobei das Kraftfahrzeuggetriebe (1) aus einem stufenlosem ersten Getriebebereich (2) und einem zweiten Stufen-Getriebebereich (3) gebildet und als automatisches Schaltgetriebe ausgeführt ist, wobei der zweite Stufen-Getriebebereich (3) mindestens zwei Gangstufen (4, 5) aufweist und durch die erste Gangstufe (4) in Kombination mit dem stufenlosen ersten Getriebebereich (2) ein erster Übersetzungsbereich und durch die zweite Gangstufe (5) in Kombination mit dem stufenlosen ersten Getriebebereich (2) ein zweiter Übersetzungsbereich ausgebildet ist und der erste und der zweite Übersetzungsbereich einen gemeinsamen Überlappungsbereich aufweisen und die stufenlose und/oder stufenweise Schaltung mit Hilfe eines Steuergerätes (6) realisiert wird, **dadurch gekennzeichnet, daß** die stufenweisen Schaltungen des zweiten Stufen-Getriebebereiches (3) innerhalb des Überlappungsbereiches während einer Änderung der Fahrpedalstellung des Gaspedals (17) ausgelöst werden.

2. Verfahren nach Anspruch 1, **dadurch gekennzeichnet, daß** die erste Gangstufe (4) den Bereich "Anfahren des Fahrzeuges" bis "Höchstgeschwindigkeit" umfaßt, insbesondere ein erster Übersetzungsbereich mit einem Übersetzungsverhältnis von 3 bis 0,75 gebildet ist.

3. Verfahren nach Anspruch 1 oder 2, **dadurch gekennzeichnet, daß** die zweite Gangstufe (5) den Bereich "Anfahren des Fahrzeugs bei kleinem Fahrwiderstand" bis zum "Overdrive" umfaßt, insbesondere ein zweiter Übersetzungsbereich mit einem Übersetzungsverhältnis von 2 bis 0,5 gebildet ist.

4. Verfahren nach einem der vorstehenden Ansprüche, **dadurch gekennzeichnet, daß** der gemeinsame Überlappungsbereich ein Übersetzungsverhältnis von 2 bis 0,75 aufweist.

5. Verfahren nach einem der vorstehenden Ansprüche, **dadurch gekennzeichnet, daß** die Fahrpedalstellung des Gaspedals (17) ermittelt wird.

6. Verfahren nach einem der vorstehenden Ansprüche, **dadurch gekennzeichnet, daß** die Änderung der Fahrpedalstellung des Gaspedals (17) ermittelt wird.

7. Verfahren nach einem der vorstehenden Ansprüche, **dadurch gekennzeichnet, daß** die Fahrpedalstellung und/oder Änderung des Gaspedals (17) über im Bereich des Gaspedals (17) vorgesehene Sensoren (20), insbesondere über einen Induktiv-Geber, einen Potentionmeter und/oder einen Winkelmesser, ermittelt wird.

8. Verfahren nach einem der vorstehenden Ansprüche, **dadurch gekennzeichnet, daß** die Drehmomente an der Getriebeausgangswelle und/oder an der Motorantriebswelle (7) sowie die Motordrehzahl gemessen wird.

9. Verfahren nach einem der vorstehenden Ansprüche, **dadurch gekennzeichnet, daß** das Steuergerät (6) aufgrund der gemessenen Daten den aktuellen Fahrwiderstand des Fahrzeuges ermittelt.

10. Verfahren nach einem der vorstehenden Ansprüche, **dadurch gekennzeichnet, daß** bei einem geringen bis mittleren Fahrwiderstand die zweite Gangstufe (5) und bei einem hohen Fahrwiderstand die erste Gangstufe (4) eingelegt wird.

11. Verfahren nach einem der vorstehenden Ansprüche, **dadurch gekennzeichnet, daß** beim Anfahren des Fahrzeugs bei hohem Fahrwiderstand kurz nach oder während des Durchtretens des Gaspedales (17) die erste Gangstufe (4) eingelegt wird, wobei die Kupplung im Schlupf und die Motordrehzahl auf der Anfahr-Solldrehzahl gehalten wird.

12. Verfahren nach einem der vorstehenden Ansprüche, **dadurch gekennzeichnet, daß** die erste Gangstufe (4) beim Anfahren des Fahrzeuges eingelegt bleibt bis die Fahrpedalstellung des Gaspedales (17) reduziert wird und hierauf dann die zweite Gangstufe (5) eingelegt wird.

## Claims

1. Method for controlling the gear changes of a motor vehicle gearbox (1), the motor vehicle gearbox (1) being formed from an infinitely variable first gearbox range (2) and a second step-by-step variable speed gearbox range (3) and being embodied as an automatic change speed gearbox, the second step-by-step variable speed gearbox range (3) having at least two gear speeds (4, 5), and the first gear speed (4) forming a first transmission ratio range in combination with the infinitely variable first gearbox range (2), and the second gear speed (5) forming a second transmission ratio range in combination with the infinitely variable first gearbox range (2), and the first and second transmission ratio ranges having a common overlapping range, and the infinitely variable and/or step-by-step changing of gears being carried out using a controller (6), **characterized in that** the step-by-step changing of gears of the second step-by-step variable speed gearbox range (3) is triggered within the overlapping range during a change in the accelerator pedal position of the accelerator pedal (17).

2. Method according to Claim 1, **characterized in that** the first gear speed (4) comprises the "starting of the vehicle" to "maximum velocity" range, in particular a first transmission ratio range with a transmission ratio of 3 to 0.75 is formed.

3. Method according to Claim 1 or 2, **characterized in that** the second gear speed (5) comprises the "starting the vehicle with small tractive resistance" to "overdrive" range, in particular a second transmission ratio range with a transmission ratio of 2 to 0.5 is formed.

4. Method according to one of the preceding claims, **characterized in that** the common overlapping range has a transmission ratio of 2 to 0.75.

5. Method according to one of the preceding claims, **characterized in that** the accelerator pedal position of the accelerator pedal (17) is determined.

6. Method according to one of the preceding claims, **characterized in that** the change in the accelerator pedal position of the accelerator pedal (17) is determined.

7. Method according to one of the preceding claims, **characterized in that** the accelerator pedal position and/or change in the accelerator pedal (17) is determined by means of sensors (20), in particular by means of an inductive sensor, a potentiometer and/or an angle sensor, provided in the vicinity of the accelerator pedal (17).

8. Method according to one of the preceding claims, **characterized in that** the torques on the gearbox output shaft and/or on the engine drive shaft (7) as well as the engine speed are measured.

9. Method according to one of the preceding claims, **characterized in that** the controller (6) determines the current tractive resistance of the vehicle on the basis of the measured data.

10. Method according to one of the preceding claims, **characterized in that** the second gear speed (5) is selected when there is a low to medium tractive resistance, and the first gear speed (4) is selected when there is a high tractive resistance.

11. Method according to one of the preceding claims, **characterized in that** when the vehicle starts with a high tractive resistance the first gear speed (4) is selected shortly after or while the accelerator pedal (17) is depressed, the clutch being held in the slip state and the engine speed being held at the starting setpoint speed.

12. Method according to one of the preceding claims, **characterized in that** the first gear speed (4) remains selected when the vehicle starts until the accelerator pedal position of the accelerator pedal (17) is reduced, and the second gear speed (5) is then selected.

## Revendications

1. Procédé de commande des changements de vitesses d'une boîte de vitesses (1) d'un véhicule automobile, dans lequel la boîte de vitesses (1) du véhicule automobile est formée à partir d'une première partie de boîte de vitesses (2) à variation continue et d'une deuxième partie de boîte de vitesses (3) à rapports étagés et est réalisée sous forme de boîte de vitesses à transmission automatique, la deuxième partie de boîte de vitesses à rapports étagés (3) présentant au moins deux rapports de transmission (4, 5) et une première partie de démultiplication étant réalisée par le premier rapport de transmission (4) en combinaison avec la première partie de boîte de vitesses (2) à variation continue, et une deuxième partie de démultiplication étant réalisée par le deuxième rapport de transmission (5) en combinaison avec la première partie de boîte de vitesses (2) à variation continue, et la première et la deuxième partie de démultiplication présentant une partie de chevauchement commune et le changement de vitesses à variation continue et/ou à rapports étagés étant réalisé à l'aide d'un appareil de commande (6), **caractérisé en ce que** les changements de vitesses à rapports étagés de la deuxième partie de boîte de vitesses (3) à rapports étagés sont déclenchés dans la partie de chevauchement lors d'une modification de la position de la pédale d'accélération (17).

2. Procédé selon la revendication 1, **caractérisé en ce que** le premier rapport de vitesse (4) comprend la partie "démarrage du véhicule" jusqu'à "vitesse maximale", en particulier une première partie de démultiplication est formée avec un rapport de démultiplication de 3 à 0,75.

3. Procédé selon la revendication 1 ou 2, **caractérisé en ce que** le deuxième rapport de vitesse (5) comprend la partie "démarrage du véhicule à petite résistance d'avance" jusqu'à "surmultiplication", en particulier une deuxième partie de démultiplication est formée avec un rapport de démultiplication de 2 à 0,5.

4. Procédé selon l'une quelconque des revendications précédentes, **caractérisé en ce que** la partie de chevauchement commune présente un rapport de démultiplication de 2 à 0,75.

5. Procédé selon l'une quelconque des revendications précédentes, **caractérisé en ce que** la position de la pédale d'accélération (17) est détectée.

6. Procédé selon l'une quelconque des revendications précédentes, **caractérisé en ce que** la variation de la position de la pédale d'accélération (17) est détectée.

7. Procédé selon l'une quelconque des revendications précédentes, **caractérisé en ce que** la position de la pédale d'accélération et/ou la variation de la position de la pédale d'accélération (17) est détectée par le biais de capteurs (20) prévus dans la région de la pédale d'accélération (17), en particulier par le biais d'un détecteur inductif, d'un potentiomètre et/ou d'un détecteur angulaire.

8. Procédé selon l'une quelconque des revendications précédentes, **caractérisé en ce que** le couple au niveau de l'arbre de sortie de boîte de vitesses et/ou au niveau de l'arbre d'entraînement du moteur (7) ainsi que la vitesse de rotation du moteur sont détectés.

9. Procédé selon l'une quelconque des revendications précédentes, **caractérisé en ce que** l'appareil de commande (6) détecte, sur la base des données mesurées, la résistance actuelle à l'avancement du véhicule.

10. Procédé selon l'une quelconque des revendications précédentes, **caractérisé en ce que** pour une résistance à l'avancement faible à moyenne, le deuxième rapport de vitesse (5) est enclenché, et pour une résistance supérieure à l'avancement, le premier rapport de vitesse (4) est enclenché.

11. Procédé selon l'une quelconque des revendications précédentes, **caractérisé en ce que**, pour une avance du véhicule avec une grande résistance à l'avancement juste après ou pendant l'actionnement de la pédale d'accélération (17), le premier rapport de vitesse (4) est enclenché, l'embrayage étant maintenu en glissement et la vitesse de rotation du moteur étant maintenue à la vitesse de rotation de consigne de démarrage.

12. Procédé selon l'une quelconque des revendications précédentes, **caractérisé en ce que** le premier rapport de vitesse (4) reste enclenché lors du démarrage du véhicule jsuqu'à ce que la position de la pédale d'accélération (17) soit réduite, puis le deuxième rapport de vitesse (5) est alors enclenché.
